# EUROPEAN PATENT SPECIFICATION

(11) **EP 0 554 278 B1**
(45) Date of publication and mention of the grant of the patent: **13.12.1995**
(21) Application number: 91917715.4
(22) Date of filing: 07.10.1991
(51) Int. Cl.: C02F 1/48

(54) **MAGNETIC APPARATUS FOR TREATMENT OF FLUIDS**
MAGNETISCHE EINRICHTUNG ZUR BEHANDLUNG VON FLÜSSIGKEITEN
DISPOSITIF MAGNETIQUE DE TRAITEMENT DE FLUIDES

(30) Priority: 05.10.1990 GB 9021717; 25.10.1990 GB 9023224
(43) Date of publication of application: 11.08.1993
(73) Proprietor: T P TECHNOLOGY PLC, High Wycombe, Buckinghamshire HP11 2SB (GB)
(72) Inventor: HAYES, John, High Wycombe, Bucks HP11 2SB (GB)
(74) Representative: Crawford, Andrew Birkby
(86) International application number: GB9101740
(87) International publication number: WO9206042

(56) References cited:
- EP-A- 0 319 936
- WO-A-88/05763
- DE-A- 2 041 621

## Description

The invention relates to a fluid treatment apparatus and in particular to a magnetic fluid treatment apparatus in which the properties of a fluid and/or materials dissolved therein are altered by passing the fluid through a magnetic field.

It has long been recognized that when a magnetic field is applied to hard water it has the effects of: (1) increasing the solubility of salts of, for example, calcium, which may be deposited as scale: and (2) changing the structure of any deposits that do appear so that they remain soft and do not form the typical hard scale.

Existing devices which exploit this effect have employed permanent magnets and electromagnets to generate magnetic fields but the resultant effects have proved to be extremely variable: in some cases the amount of scale has been considerably reduced, whilst in others little effect has been observed. It is believed that the causes of this are the wide variations in water balance (ph, hardness, and the composition of materials present in the water).

A magnetic water treatment apparatus is disclosed in US Patent 4,485,012, in which a first coil, mounted on a pipe between a water source and a filter, produces an alternating magnetic field, generating mechanical vibrations in a pair of metal plates between which a flow of water passes and thereby causing mechanical perturbations in the water. A second coil, mounted on a pipe between the filter and pressure tank and remote from the first coil, is coupled to a d.c. signal which produces a constant magnetic field in the pipe through which the water passes in order to alter the solubility of salts in the water.

In the water treatment apparatus of the present invention a strong alternating magnetic field and a strong constant magnetic field, superimposed on the alternating field, are generated in the vicinity of the water being treated. This is because a constant field alone may not completely align the structure of the salts dissolved in the water and produce the desired effects of reducing scale deposits. On the other hand, the simultaneous use of the alternating field enhances the efficiency of the constant field by "freeing" the salts in solution so that they may more easily have their structures aligned by the constant field.

Desirable effects have also been exploited in the magnetic treatment of liquid fuels such as oil, diesel and petrol which undergo combustion in, for example, boilers and motor vehicle engines, and it has been found with existing apparatus that the efficiency with which such fuels are burnt may be increased when they are passed through a constant magnetic field.

However, it is believed that the full advantages of magnetic treatment of hydrocarbon fuels may not have been realised by such use of a constant magnetic field alone.

The present invention, in a similar manner to the water treatment apparatus mentioned above improves on existing magnetic fuel treatment devices by generating a strong alternating magnetic field and a strong constant magnetic field superimposed on the alternating field in the fuel being treated. Such treatment, which is applicable to both liquid and gaseous fuels, improves the fuel combustion efficiency on existing levels.

The present invention provides a fluid treatment apparatus, comprising: first magnetisation means for generating a constant magnetic field of pre-determined intensity, and adapted to be mounted on a conveyance in a fluid system; second magnetisation means for producing an alternating magnetic field of predetermined frequency and adapted to operate on the same volume of fluid as the first magnetisation means.

The first and second magnetisation means preferably comprise one or more coils either in a single assembly or mounted separately around the periphery of a non-magnetic (e.g. plastic) pipe through which water is passed. Each magnetisation means may comprise a single coil, or a pair of coils mounted opposite each other around the circumference of the pipe.

The first and second magnetisation coils may be wound one on top of the other (layer wound) at the same point on a pipe, or may be mounted at longitudinally adjacent points on the pipe, in a manner similar to the arrangement of horizontal and vertical deflection coils of a cathode ray tube.

In order to concentrate the flux of the magnetic field within the fluid flow, magnetic pole pieces are preferably mounted on the pipe, within or adjacent the coil windings.

The coil assembly may include two coils connected in series and mounted (with respective pole pieces) opposite each other around the circumference of the pipe, effectively forming a single circuit driven by one source of power. Alternatively, each coil may be driven by a separate power source.

Power is supplied to the coils from a control unit which supplies a constant d.c. current to the first magnetisation coils, the current being adjustable to optimise the effect of realigning the structure of the salts dissolved in the water. The control unit also supplies an alternating current to the second magnetisation coils, and the magnitude and frequency of the alternating current may be adjusted, the latter from "mains" frequencies of 50-60H_{z} up to 500RH_{z} or more in order to obtain the greatest efficiency.

Embodiments of the present invention will now be described, by way of example only where the fluid is water (or an aqueous solution), with reference to the accompanying drawings, in which:
Figure 1 is a diagram of the general arrangement of the water treatment apparatus of the present invention in relation to a water-carrying pipe;
Figure 2 illustrates a coil assembly mounted on a water-carrying pipe in a first embodiment of the present invention, (a) as a side view, and (b) as a plan view;
Figure 3 shows a coil assembly mounted on a water-carrying pipe in a second embodiment of the present invention;
Figure 4 shows alternative methods of increasing the flux within the water-carrying pipe in the embodiments of the invention, (a) using a magnetic pole pieces, and (b) using an overwound coil along the periphery of the magnetisation coils.

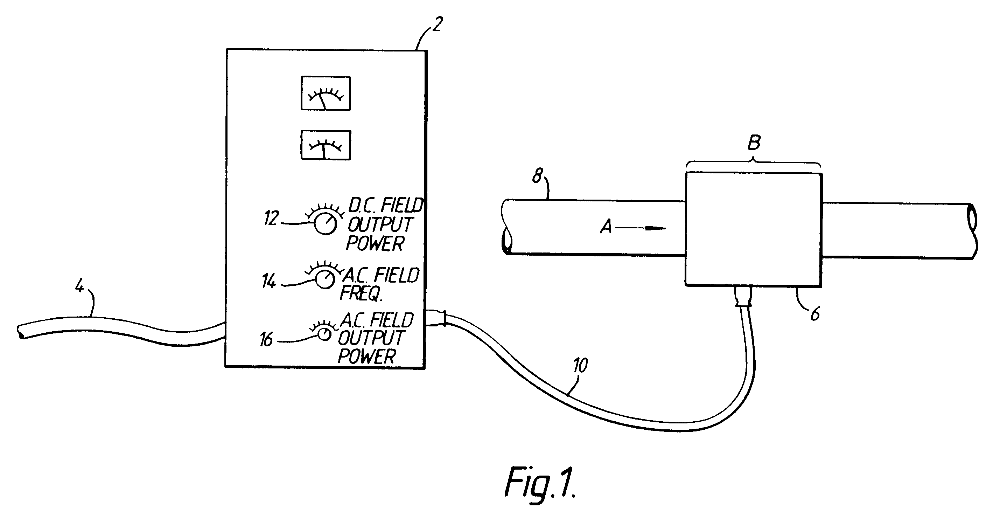

A fluid treatment apparatus for the ease of fluids other than water (or aqueous solutions) has the same construction as the water treatment apparatus shown in, and described with reference to, Figures 1 to 5 , save that the fluid flowing in the pipe 8 is a liquid or vapour such as oil, diesel or petrol, or a mixture containing such fuels.

The water treatment apparatus according to the present invention is illustrated in Figure 1. In this apparatus, a control unit 2 is supplied with power from the main's supply via a main's lead 4, and the control unit 2 in turn supplies power to a coil assembly 6, mounted around the periphery of a plastic water-carrying pipe 8, via a multi-conductor cable 10. The control unit 2 is provided with controls 12, 14, 16 for adjusting the d.c. output power to the constant-field coil(s), the frequency of the alternating field, and the a.c. output power to the alternating-field coil(s), respectively. The water flows in the pipe in the direction of the arrow A and comes under the influence of the magnetic fields when present in the region B.

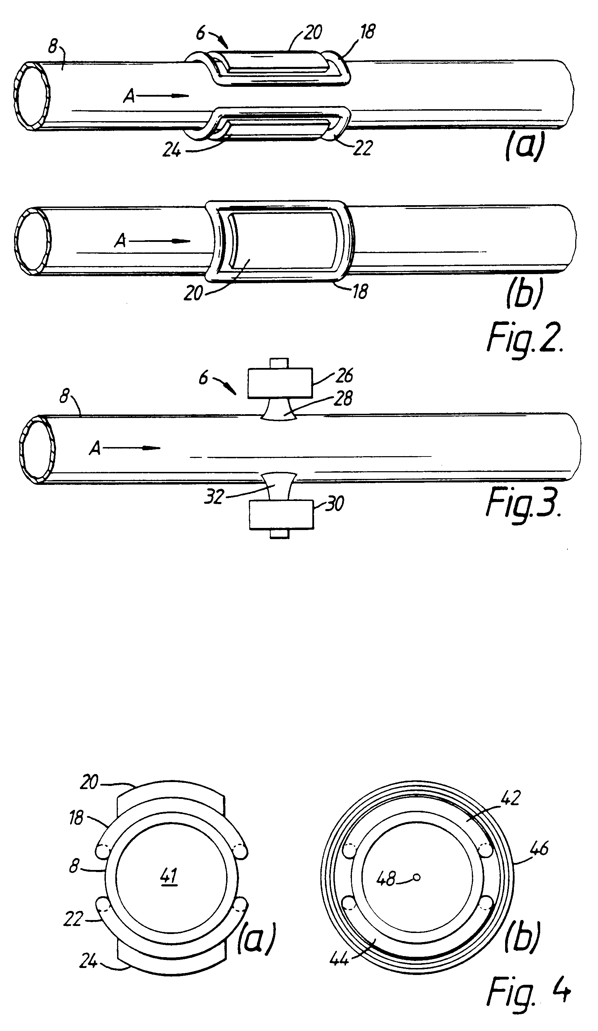

In Figures 2(a) and (b), respectively, side and plan views of the coil assembly 6 of a first embodiment of the present invention are shown. The coil assembly 6 comprises a first multi-winding magnetisation coil 18 and associated pole piece 20 (made of a ferromagnetic material); and a second multi-winding magnetisation coil 22 and associated pole piece 24. Both the coils 18, 22 and the pole pieces 20, 24 are arcuate in cross-section so as to enable them to be snugly mounted on the outer wall of the pipe 8. The first coil 18 is supplied with a direct current from the control unit 2 via the cable 10 and generates a constant magnetic field. The second coil 22 is supplied with an alternating current from the control unit 2 via the cable 10, and generates an alternating magnetic field.

Referring to Fig. 3, the coil assembly 6 of a second embodiment of the present invention is shown and comprises a first multi-turn magnetisation coil 26, wound about an axis perpendicular to the direction of elongation of the pipe 8, attached to a ferromagnetic pole piece 28 and mounted on the outer wall of the pipe 8. The coil assembly 6 also comprises a second multi-turn coil 30 (wound in the same manner as the coil 26) attached to a pole piece 32 and mounted diametrically opposite the coil 26 on the outer wall of the pipe 8. The first and second coils 26, 30 generate constant and alternating magnetic fields, respectively, as in the first embodiment described with reference to Fig. 2.

Referring to Fig. 4, a cross-section through the pipe and coil assembly is shown in the first embodiment, and illustrates the arrangement of the coils 18, 22 and pole pieces 20, 24 which enables the magnetic flux density in the core 41 of the water carrying pipe 8 to be maximised. The coils and pole pieces are arranged in a similar manner in the third embodiment.

An alternative arrangement for optimising flux density inside the pipe 8 is shown in Fig. 4(b), in which the first and second magnetisation coils 42, 44 and identical to the first and second coils 18, 22 of the first embodiment. However, the pole pieces 20, 24 are omitted and replaced by a multi-turn coil 46 which is wound around the outside of the coils 42, 44 about the axis of the pipe 8. The coil 46 is not supplied with any current, but rather forms a pole performing the same function as the pole pieces 20, 24.

## Claims

1. A fluid treatment apparatus, comprising:
a first magnetisation means for generating a constant magnetic field of predetermined intensity, and adapted to be mounted on a conveyance in a fluid system;
a second magnetisation means for generating an alternating magnetic field of predetermined frequency and adapted to be mounted on the conveyance to operate on the same volume of fluid as the first magnetisation means; wherein the alternating magnetic field is superimposed on the constant magnetic field within the conveyance.

2. An apparatus according to claim 1, wherein:
the first and second magnetisation means include one or more magnetisation coils mounted separately or in a single assembly around the periphery of the conveyance.

3. An apparatus according to claim 1 or 2 wherein:
each magnetisation means comprises a single magnetisation coil or a pair of diametrically opposed magnetisation coils, mounted around the periphery of the conveyance.

4. An apparatus according to claim 1, 2 or 3, wherein:
the magnetisation coils of the first and second magnetisation means are wound one on top of the other or disposed at longitudinally adjacent points on the conveyance.

5. An apparatus according to any of claims 1 to 4, wherein:
the first and second magnetisation means include magnetisation coils and one or more magnetic pole pieces mounted on the conveyance, the pole pieces(s) being disposed within or adjacent the magnetisation coils.

6. An apparatus according to any of the preceding claims, wherein:
said first or second magnetisation means includes two magnetisation coils connected in series and mounted diametrically apposite each other around the periphery of the conveyance, and
the magnetisation coils are connected to a single power source.

7. An apparatus according to any of claims 2 to 5, wherein:
the magnetisation coils are connected to separate power sources.

8. An apparatus according to any of the preceding claims, wherein:
the first magnetisation means includes means for varying the intensity of the constant magnetic field.

9. An apparatus according to any of the preceding claims, wherein:
the second magnetisation means includes means for varying the frequency of the alternating magnetic field.

10. An apparatus according to any of the preceding claims, wherein:
the conveyance comprises a pipe formed of a non-metallic material.

## Patentansprüche

1. Fluidbehandlungsvorrichtung, die umfaßt:
eine erste Magnetisierungseinrichtung, die ein magnetisches Gleichfeld vorgegebener Stärke erzeugt und an einem Förderweg in einem Fluidsystem angebracht wird;
eine zweite Magnetisierungseinrichtung, die ein magnetisches Wechselfeld vorgegebener Frequenz erzeugt und an dem Förderweg angebracht werden kann, um so auf das gleiche Fluidvolumen wie die erste Magnetisierungseinrichtung einzuwirken; wobei das magnetische Wechselfeld über das magnetische Gleichfeld in dem Förderweg gelegt wird.

2. Vorrichtung nach Anspruch 1, wobei:
die erste und die zweite Magnetisierungseinrichtung eine oder mehrere Magnetisierungsspulen enthalten, die separat oder in einer einzelnen Baugruppe um den Umfang des Förderweges herum angebracht sind.

3. Vorrichtung nach Anspruch 1 oder 2, wobei:
jede Magnetisierungseinrichtung eine einzelne Magnetisierungsspule oder ein Paar einander diametral gegenüberliegender Magnetisierungsspulen umfaßt, die um den Umfang des Förderweges herum angebracht sind.

4. Vorrichtung nach Anspruch 1, 2 oder 3, wobei:
die Magnetisierungsspulen der ersten und der zweiten Magnetisierungseinrichtung übereinander gewickelt sind, oder an in Längsrichtung benachbarten Punkten an dem Förderweg angeordnet sind.

5. Vorrichtung nach einem der Ansprüche 1 bis 4, wobei:
die erste und die zweite Magnetisierungseinrichtung Magnetisierungsspulen und ein oder mehrere Polstück/e enthalten, die an dem Förderweg angebracht sind, wobei das/die Polstück/e in den Magnetisierungsspulen oder an sie angrenzend angeordnet sind.

6. Vorrichtung nach einem der vorangehenden Ansprüche, wobei:
die erste oder die zweite Magnetisierungseinrichtung zwei Magnetisierungsspulen enthält, die in Reihe verbunden und einander diametral gegenüberliegend um den Umfang des Förderweges herum angebracht sind, und
die Magnetisierungsspulen an eine einzelne Spannungsquelle angeschlossen sind.

7. Vorrichtung nach einem der Ansprüche 2 bis 5, wobei:
die Magnetisierungsspulen an separate Spannungsquellen angeschlossen sind.

8. Vorrichtung nach einem der vorangehenden Ansprüche, wobei:
die erste Magnetisierungseinrichtung eine Einrichtung zum Verändern der Stärke des magnetischen Gleichfeldes enthält.

9. Vorrichtung nach einem der vorangehenden Ansprüche, wobei:
die zweite Magnetisierungseinrichtung eine Einrichtung zum Verändern der Frequenz des magnetischen Wechselfeldes enthält.

10. Vorrichtung nach einem der vorangehenden Ansprüche, wobei:
der Förderweg ein aus einem nichtmetallischen Material bestehendes Rohr umfaßt.

## Revendications

1. Appareil de traitement de fluide, comprenant :
un premier dispositif de magnétisation pour générer un champ magnétique constant d'une intensité prédéterminée, et adapté pour être monté sur une canalisation dans un système de fluide ;
un second dispositif de magnétisation pour générer un champ magnétique alternatif d'une fréquence prédéterminée et adapté pour être monté sur la canalisation pour fonctionner sur le même volume de fluide que le premier dispositif de magnétisation, dans lequel le champ magnétique alternatif est superposé au champ magnétique constant dans la canalisation.

2. Appareil selon la revendication 1, dans lequel :
les premier et second dispositifs de magnétisation comprennent une ou plusieurs bobines de magnétisation montées séparément ou dans un assemblage unique autour du pourtour de la canalisation.

3. Appareil selon la revendication 1 ou 2 dans lequel :
chaque dispositif de magnétisation comprend une bobine de magnétisation unique ou une paire de bobines de magnétisation diamétralement opposées, montées autour du pourtour de la canalisation.

4. Appareil selon la revendication 1, 2 ou 3, dans lequel :
les bobines de magnétisation des premier et second dispositifs de magnétisation sont enroulées l'une sur l'autre ou disposées longitudinalement à des points voisins sur la canalisation.

5. Appareil selon l'une quelconque des revendications 1 à 4, dans lequel :
les premier et second dispositifs de magnétisation comprennent des bobines de magnétisation et une ou plusieurs pièces polaires magnétiques montées sur la canalisation, les pièces polaires (s) étant disposées dans ou au voisinage des bobines de magnétisation.

6. Appareil selon l'une quelconque des revendications précédentes, dans lequel :
lesdits premier et second dispositifs de magnétisation comprennent deux bobines de magnétisation reliées en série et montées diamétralement opposées l'une à l'autre autour du pourtour de la canalisation, et
les bobines de magnétisation sont reliées à une source d'alimentation unique.

7. Appareil selon l'une quelconque des revendications 2 à 5, dans lequel :
les bobines de magnétisation sont reliées à des sources d'alimentation séparées.

8. Appareil selon l'une quelconque des revendications précédentes, dans lequel :
le premier dispositif de magnétisation comprend un dispositif pour faire varier l'intensité du champ magnétique constant.

9. Appareil selon l'une quelconque des revendications précédentes, dans lequel :
le second dispositif de magnétisation comprend un dispositif pour faire varier la fréquence du champ magnétique alternatif.

10. Appareil selon l'une quelconque des revendications précédentes, dans lequel :
la canalisation comprend un tuyau formé d'un matériau non métallique.
